# EUROPÄISCHE PATENTANMELDUNG

(11) **EP 0 696 768 A1**
(43) Veröffentlichungstag der Anmeldung: **14.02.1996**
(21) Anmeldenummer: 95108880.6
(22) Anmeldetag: 09.06.1995
(51) Int. Cl.: G05D 23/12, F16K 31/68, F23N 5/10, F23N 5/06

(54) **Vorrichtung zur Regelung von Steuervorgängen, insbesondere als Thermosteuerung einer Gasbrennstelle und Verfahren zu seiner Herstellung**

(30) Priorität: 12.08.1994 DE 9413047 U
(71) Anmelder: Elektro- und Gas-Armaturen-Fabrik GmbH, D-58119 Hagen (DE)
(72) Erfinder: Gertler, Kurt, D-58119 Hagen (DE); Schütter, Friedhelm, D58313 Herdecke (DE)
(74) Vertreter: Patentanwälte Meinke, Dabringhaus und Partner

(57) **Zusammenfassung**

Mit einer Vorrichtung (1) und einem Verfahren zur Herstellung dieser Vorrichtung zur Regelung von Steuervorgängen unter Einsatz einer Hydraulikflüssigkeit in einem der Erhitzung unterworfenen Hydraulikreservoir mit einem Kapillarrohr (2), insbesondere als Thermosteuerung einer Gasbrennstelle, soll eine Lösung geschaffen werden, die eine optimale Membraneinspannung ermöglicht, und zwar in einfacher Bauweise und mit hoher Funktionstüchtigkeit, wobei eine einfache Anpassung an das jeweils spezielle Anwendungsgebiet möglich gemacht werden soll.

Dies wird vorrichtungsmäßig dadurch erreicht, daß der Rand (4a) der Membran (4) von einer an der Membranaufnahme (3) festlegbaren, gewindefreien Fixierhülse (5) gegen den Topfboden (3a) festgelegt ist, wobei die Fixierhülse (5) an der topfförmigen Membranaufnahme (3) nach Einspannung der Membran (4) durch Umbördeln festgelegt ist.

## Beschreibung

Die Erfindung richtet sich auf eine Vorrichtung zur Regelung von Steuervorgängen unter Einsatz einer Hydraulikflüssigkeit in einem der Erhitzung unterworfenen Hydraulikreservoir mit einem Kapillarrohr der im Oberbegriff des Anspruches 1 angegebenen Gattung sowie auf ein Verfahren zur Herstellung einer solchen Vorrichtung.

Gattungsbildende Vorrichtungen sind beispielsweise aus dem DE-U-85 23 111 oder der DE-C-39 41 879 bekannt, wobei bei beiden Lösungen die die Membran zwischen sich aufnehmenden Elemente mit Schraubgewinden versehen sind, um den Anpreßdruck der Membran aufzubringen. Diese Schraubgewinde haben den erheblichen Nachteil, daß zum einen ein genau definierbarer Anpreßdruck sehr schwer zu erreichen ist, zum anderen durch das Aufsetzen des Hülsenrandes auf die Membran und der gleichzeitigen Verdrehung es an der Membran zu Verwerfungen kommen kann, die kurzfristig auch zur Zerstörung führen kann.

Aus der DE-A-28 56 313 ist ein thermostatisches Element bekannt, bei dem in einem Topf ein mikrokristallines Wachs als Ausdehnungsmedium enthalten ist, wobei der obere Topfrand unter Einklemmung einer Membran mit dem Außenflansch einer Rohrführung für einen Tauchkörper festgeklemmt ist.

Es ist auch bekannt, eine Randwulst an der Membran zum Festklemmen einzusetzen, so aus der DE-C-25 19 879, der US-3 593 917 oder DE-A-33 04 804.

Zum Stand der Technik sei schließlich noch auf die EP-0 350 084, die DD-31 611 oder die DE-A-16 50 506 oder DE-B-23 17 382 verwiesen.

Gegenüber den bekannten Lösungen liegt die Aufgabe der Erfindung darin, eine optimale Membraneinspannung zu ermöglichen, und zwar in einfacher Bauweise und mit hoher Funktionstüchtigkeit, wobei eine einfache Anpassung an das jeweils spezielle Anwendungsgebiet möglich gemacht werden soll.

Mit einer Vorrichtung der eingangs bezeichneten Art wird diese Aufgabe gemäß der Erfindung dadurch gelöst, daß der Rand der Membran von einer an der Membranaufnahme festlegbaren, gewindefreien Fixierhülse gegen den Topfboden festgelegt ist, wobei die Fixierhülse an der topfförmigen Membranaufnahme nach Einspannung der Membran durch Umbördeln festgelegt ist.

Mit der Erfindung wird erreicht, daß eine sehr flexible Anpassung an unterschiedliche Einsatzzwecke insofern möglich wird, als beispielsweise unterschiedliche Fixierhülsen eingesetzt werden können je nach Länge des äußeren Wandbereiches.

Wird, wie dies die Erfindung in weiterer Ausgestaltung auch vorsieht, die Fixierhülse für die Membran gleichzeitig als Führungshülse für den Steuerkolben ausgebildet, was für sich gesehen durch das gattungsbildende DE-U-85 23 111 bekannt ist, so kann eine unterschiedliche Hubauslenkung des Steuerkolbens erreicht werden bei gleicher Temperaturbeaufschlagung des Temperaturfühlers und des damit verbundenen Kapillarrohres. So ist bei kleinerem Durchmesser des Steuerkolben mit angepaßter Fixier-/Führungshülse eine größere Hubauslenkung erreichbar, bei größerem Durchmesser eine kleinere Hubauslenkung.

Weitere Ausgestaltungen der Erfindung ergeben sich aus den Unteransprüchen, wobei eine Gestaltung darin bestehen kann, daß der Topfboden der Membranaufnahme mit einer Ringnut zum Einklemmen des Außenrandes der Membran ausgerüstet sein kann, wodurch sich z.B. eine zuverlässige Festlegung am Dichtring der Membran bei einfacher Montage selbst dann ergibt, wenn die Membran geringfügige Maßtoleranzen aufweisen sollte.

Eine weitere zweckmäßige Ausgestaltung kann darin bestehen, daß die stirnseitige, an der Membran anliegende Steuerkolbenfläche eine außenrandseitige Rückkröpfung oder Phase und/oder eine in Richtung auf das Steuerkolbeninnere weisende Wölbung aufweist.

Damit lassen sich beispielsweise scharfe Umlenkungen der Membran mit der damit verbundenen Gefahr einer Zerstörung ebenso vermeiden, wie eine Minderung bei Wechselbelastung in diesem Bereich, beim Einspannen auftretende Vorwölbungen können, soweit gewünscht, entsprechend kompensiert werden.

Eine einfache konstruktive Ausgestaltung besteht erfindungsgemäß darin, daß der Steuerkolben seinerseits topfförmig ausgebildet ist mit einem innen geführten, federbeaufschlagten Ventilteller, wobei zweckmäßig der Ventilkolben mit einer Durchgangsbohrung auf seiner dem Ventilteller zugewandten Kolbenfläche mit einer die Durchgangsöffnung umgebenden, sich am Ventilteller dichtend anlegenden Formdichtung versehen ist.

Vorteilhaft kann beispielsweise die Formdichtung querschnittlich etwa trapezförmig ausgebildet sein, wobei eine besondere Möglichkeit der Einbringung der Durchgangsbohrung im Ventilkolben nach der Erfindung dadurch erreichbar ist, daß die Durchgangsöffnung durch den Ventilkolben als von der Formdichtung her ausgebildete zentrische Sackbohrung einerseits und wenigstens zwei von der entgegensetzten Seite außermittig angebrachten weiteren Sackbohrungen anderseits derart gebildet ist, daß Bohrungsbereiche der entgegengesetzt eingebrachten Sackbohrungen sich zur Bildung der Durchgangsöffnungen überschneiden.

Durch diese Art der Gestaltung wird mit einfachen Mitteln einmal erreicht, daß die Durchgangsöffnung im Ventilkolben nicht unnötig verengt wird, da es möglich ist, die Sackbohrungen mit unterschiedlichen Durchmessern derart auszugestalten, daß der gesamte zur Verfügung stehende Querschnitt gleich bleibt. Darüber hinaus ist es möglich, durch die nichtzentrischen Sackbohrungen im Zentrum des Ventilkolbens eine Anlagefläche für einen Betätigungsstößel bereitzustellen, ohne daß es dazu eines gesonderten Bauteiles bedarf.

Zur Lösung der eingangs bezeichneten Aufgabe sieht die Erfindung auch ein Herstellungsverfahren für eine derartige Vorrichtung vor, welches sich dadurch auszeichnet, daß in eine mit einer Durchgangsbohrung für ein Kapillarrohr versehene, topfförmige Membranaufnahme auf den Topfboden eine die Kapillarrohrdurchgangsöffnung verschließende Membran eingelegt und mit einer an der Membranaufnahme festlegbaren Fixierhülse gegen den Topfboden durch Umbördeln des freien Randes der Membranaufnahme über den freien Rand der eingehenden Fixierhülse festgelegt wird.

Auf diese Art der Herstellungsweise lassen sich eine Reihe von Vorteilen erreichen. So kann die zur Fixierung der Membran herangezogene Fixierhülse z.B. unterschiedliche Längen aufweisen, um damit unterschiedliche Anpreßdrücke beim Festlegen durch Umbördeln zu erzeugen. Sie kann auch unterschiedlich große Innendurchmesser aufweisen, um im Durchmesser unterschiedliche Steuerkolben aufzunehmen, die dann andere Hübe ausführen kann bei gleicher Auslenkung der Membran, so daß eine solche Membran damit auf unterschiedlichen Gebieten eingesetzt werden kann.

Ausgestaltungen ergeben sich aus den weiteren Verfahrensansprüchen, wobei es zweckmäßig ist, beim Verschließen des Systemes hohe Temperaturen auf die Vorrichtung einwirken zu lassen, um erst ab bestimmten Temperaturbereichen eine Auslenkung der Membran zu ermöglichen, wodurch Temperaturbeeinflussungen bei einer Gehäuseerwärmung vermieden werden. So kann beispielsweise das System bei 100°C Umgebungstemperatur geschlossen werden, so daß eine Membranauslenkung erst oberhalb dieses Temperaturbereiches erfolgt.

Die Erfindung ist nachstehend anhand der Zeichnung beispielsweise näher erläutert. Diese zeigt in
- Fig. 1, 5 und 6: Schnittzeichnungen durch Ausgestaltungen einer erfindungsgemäßen Vorrichtung in zum Teil vereinfachter Wiedergabe,
- Fig. 2: eine Aufsicht etwa gemäß Pfeil III in Fig. 4,
- Fig. 3: eine Schnittzeichnung der dem Ventilkolben zugeordneten Formdichtung,
- Fig. 4: einen Schnitt durch den Ventilkolben sowie in den
- Fig. 7 bis 12: unterschiedliche Einbau- und Belastungspositionen der Vorrichtung im Membranbereich im Schnitt.

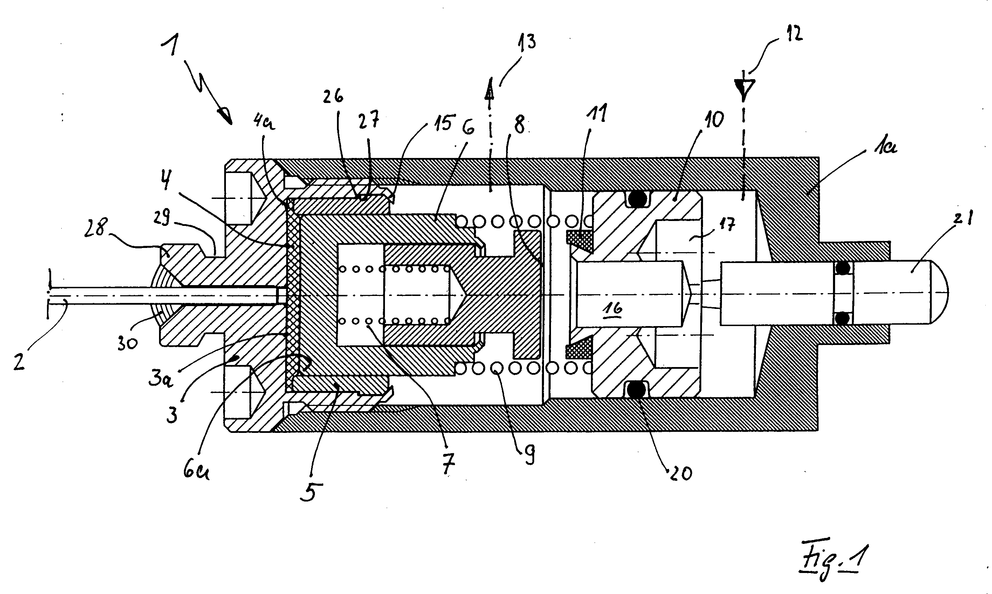

In der folgenden Beschreibung insbesondere der Fig. 1, 5 und 6 werden für funktionell identische Bauteile die gleichen Bezugsziffern benutzt.

Die Vorrichtung, allgemein mit 1 bezeichnet, ist hier als Thermosteuerung einer Gasbrennstelle dargestellt, sie wird von den folgenden, in Fig. 1 im wesentlichen von links nach rechts dargestellten Bauteilen gebildet, nämlich u.a. von einem mit einer nur andeutungsweise wiedergegebenen Kapillarrohr 2 versehenen topfförmigen Membranaufnahme 3, einer im Topfboden verklemmten Membran 4, die an einer im Inneren des Topfes angeordneten Fixierhülse 5 befestigt ist, wobei die Membranaufnahme 3 in einem Vorrichtungsgehäuse 1a dicht eingeschraubt ist.

Im Inneren der Fixierhülse 5 ist ein im wesentlichen ebenfalls topfförmig ausgebildeter Steuerkolben 6 angeordnet, der wiederum in seinem Inneren einen von einer Feder 7 beaufschlagten, mit einem Ventilteller 8 versehenen Kolben aufweist, der außen von einer den Steuerkolben 6 beaufschlagenden Druckfeder 9 umgeben ist.

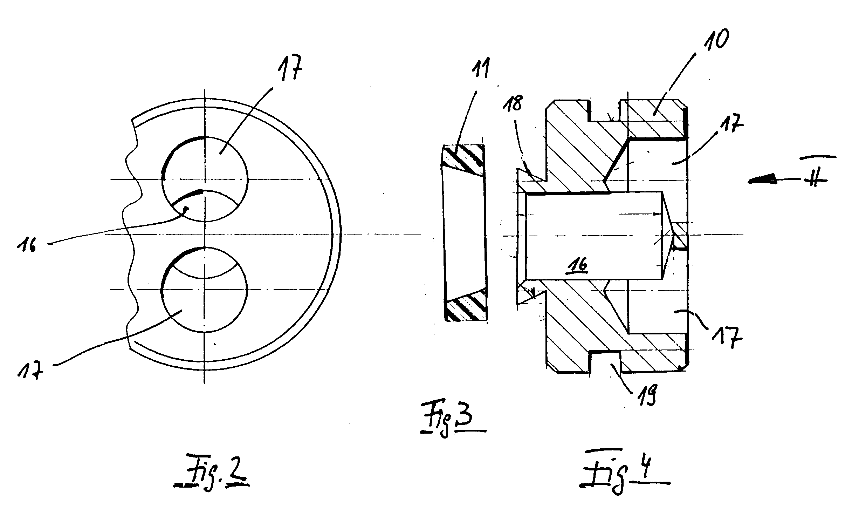

Die Feder 9, die den Steuerkolben 6 beaufschlagt, stützt sich ihrerseits an einem mit Durchgangsbohrungen versehenen Ventilkolben 10 ab, der an seiner dem Ventilteller 8 zugewandten Seite eine die Durchgangsbohrung umgebende querschnittlich trapezförmige Formdichtung 11 aufweist, wobei die Gestaltung des Ventilkolbens 10 mit der Formdichtung 11 sich insbesondere auch aus den Fig. 2 bis 4 ergibt.

Strichpunktiert angedeutet ist noch in Fig. 1 ein Gaseintritt 12 und ein Gasaustritt 13.

Zur Festlegung der Fixierhülse 5 weist im Ausführungsbeispiel der Fig. 1 der obere freie innere Randbereich der Membranaufnahme 3 eine Schulter 26 auf, während die Fixierhülse 5 einen gegenläufig geformten Außenkragen 27 aufweist, die in der Verschlußlage aneinander anliegen, wenn das freie Ende 15 umgebördelt wird, um so einen definierten Anpreßdruck für die Membran 4 zu erreichen. In Fig. 1 ist auch dargestellt, daß der zum Einlöten des Kapillarrohres 2 vorgesehene, nach außen weisende Stutzen 28 wenigstens eine diese querschnittlich verjüngende Nut 29 aufweist, derart, daß beim Einbringen des Lotes 30 die dort erzeugte Wärme weniger leicht das Gesamtsystem erhitzen kann.

Wie sich aus Fig. 1 auch ergibt, weist die stirnseitige, an der Membran 4 anliegende Steuerkolbenfläche eine Rückkröpfung 6a auf, die zweckmäßig gerundet ausgebildet ist, um in diesen Bereich bei Anlage und Bewegung an die Membran 4 diese zu schonen.

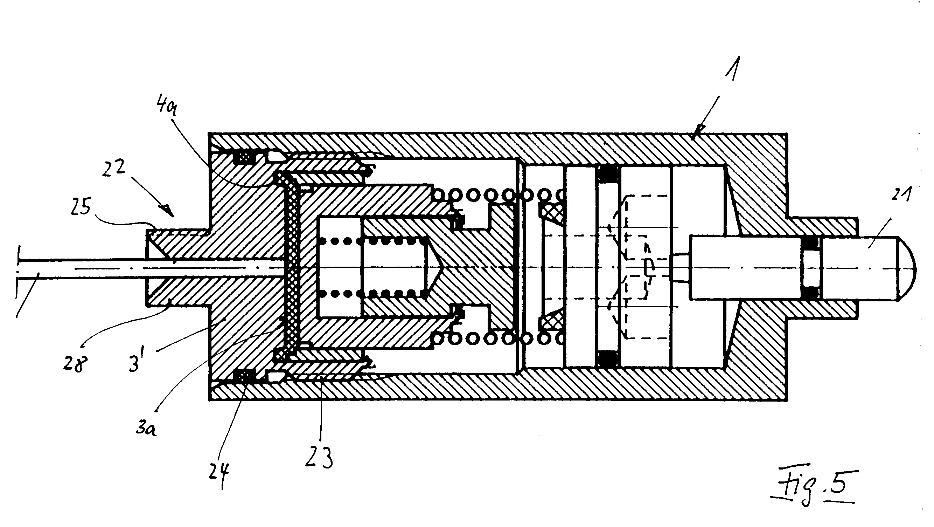

In den Fig. 2 bis 4 sind Einzelheiten des Ventilkolbens 10 dargestellt. Hieraus ergibt sich, daß in Fig. 4 von links eingebracht eine zentrische Sackbohrung 16 vorgesehen ist, der in Fig. 4 zwei von rechts eingebrachte weitere Sackbohrungen 17 derart zugeordnet sind, daß die Bohrungen zusammen eine Durchtrittsöffnung für das steuernde Medium, z.B. für das Gas, bilden. Zur Fixierung der querschnittlich etwa trapezförmigen Formdichtung 11 ist ein entsprechend entgegengesetzt geformter schwalbenschwanzförmiger Ansatz 18 am Ventilkörper 10 vorgesehen, die in eine Ringnut 19 eingebrachte Ringdichtung ist in Fig. 1 mit 20 bezeichnet.

Erkennbar kann sich durch axialen Schub bei vorgewählter Position des Ventilkolbens 10 der Ventilteller 8, in Fig. 1 von links kommend, auf der Stirnseite der Formdichtung 11 zum dichtenden Ansatz kommen, umgekehrt kann etwa durch Betätigung eines Stößels 21 nach links eine entsprechende Anlage bewirkt werden.

Dehnt sich die Hydraulikflüssigkeit in einem hier nicht dargestellten Reservoir durch Hitzeeinwirkung aus, überträgt sich über das Kapillarrohr 2 diese Ausdehnung auf die Membran 4, die sich in Fig. 1 nach rechts auswölbt, dabei den Steuerkolben 6 gegen die Kraft der Feder 9 nach rechts bewegt und über die Druckfeder 7 den Ventilteller 8 ebenfalls nach rechts gegen die Formdichtung 11 drückt und den Gasdurchgang entsprechend steuert.

Eine zuvor beschriebene Überdrucksicherung ist deswegen notwendig, um beim Zurückstellen der Gaszufuhr von einer hohen auf eine niedrige Temperatur eine Zerstörung des Systems zu vermeiden. So übernimmt die im Steuerkolben integrierte Überdrucksicherung, bestehend aus dem Ventilteller 8 und der Druckfeder 7, den entsprechenden Überdruck, da sich die Hydraulikflüssigkeit, die ansonsten die Verstellung bewirkt, nicht komprimieren läßt.

Eine Eichung des Systems ist in den in den Fig. 1 bzw. 2 dargestellten Beispielen wegen der gasdichten Verschraubung der Membranaufnahme 3 mit dem Vorrichtungsgehäuse 1 von der Seite des Stößels 21 her möglich.

Hier eine andere Art der Eichung zu ermöglichen, zeigt die Fig. 5. Bei diesem Beispiel ist eine Eichung von der allgemein mit 22 bezeichneten Weggeberseite her möglich. Hier ist bei ansonsten vergleichbarer bzw. gleicher Bauweise die Membranaufnahme 3' über das Gewinde 23 mit ihrer Eintauchtiefe im Gehäuse 1 veränderbar angeordnet, eine Abdichtung erfolgt über einen O-Ring 24, wobei eine Hemmung der Verstellung dadurch erfolgen kann, daß der O-Ring 24 eine entsprechende Kraft ausübt. Auch kann das Gewinde 23 wenigstens in seine in Fig. 5 nach links weisenden ersten Gewindegänge gestaucht ausgebildet sein, um hier über das Gewinde eine zusätzliche Hemmung zu erreichen.

Zur Verstellung kann am Lötstutzen 28 für das Kapillarrohr 2 eine Schlüsselfläche 25 vorgesehen sein, was in der Figur lediglich angedeutet ist.

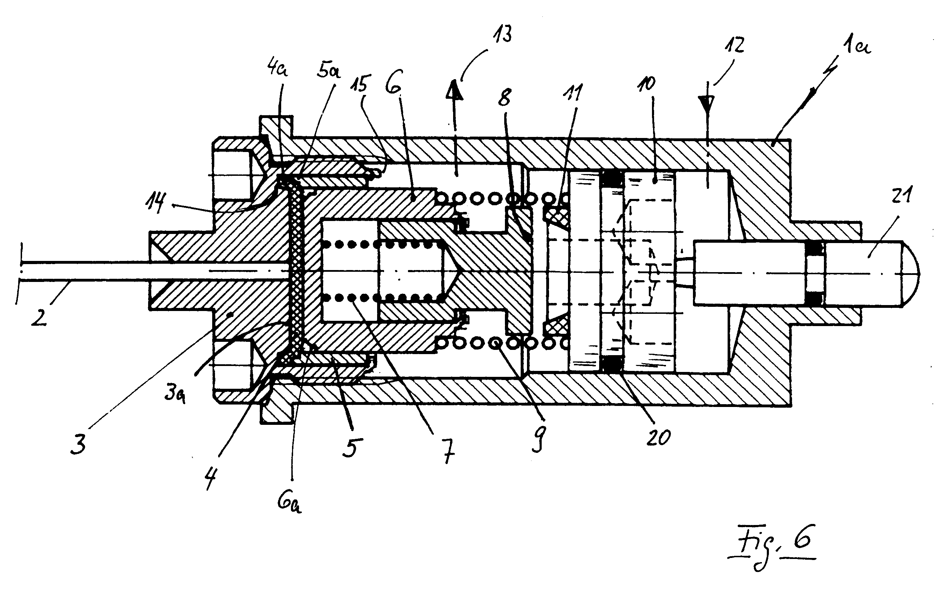

In Fig. 6 ist ein weiteres abgewandeltes Beispiel der Erfindung dargestellt mit einer abgewandelten Einspannung der Membran 4. Wie sich aus Fig. 6 linke Figurenhälfte ergibt, weist der mit 3a bezeichnete Topfboden der Membranaufnahme 3 eine Ringnut 14 auf, in die der Außenrand der Membran 4 durch eine außenrandseitige Schulter 5a der Fixierhülse 5 eingepreßt wird, die wiederum ihrerseits durch Umbördeln einer Schulter 15 am freien Ende der Membranaufnahme 3 im Inneren des Topfes dieser Membranaufnahme 3 festlegbar ist, wobei in Fig. 1 untere Figurenhälfte der umgebördelte Zustand und in der oberen Figurenhälfte der noch nicht umgebördelte Zustand dieser Schulter 15 dargestellt ist.

Aufgrund der speziellen Ausgestaltung der Einspannung der Membran in der im Topfboden eingebrachten Ringnut 14 in Verbindung mit der Fixierhülse 5 ist zum einen eine dichtende Anlage gewährleistet, zum anderen eine schonende Randgestaltung, wobei die Montage einer derartigen Vorrichtung 1 denkbar einfach ist, da wesentliche Befestigungsschritte durch Umbördeln erreicht werden.

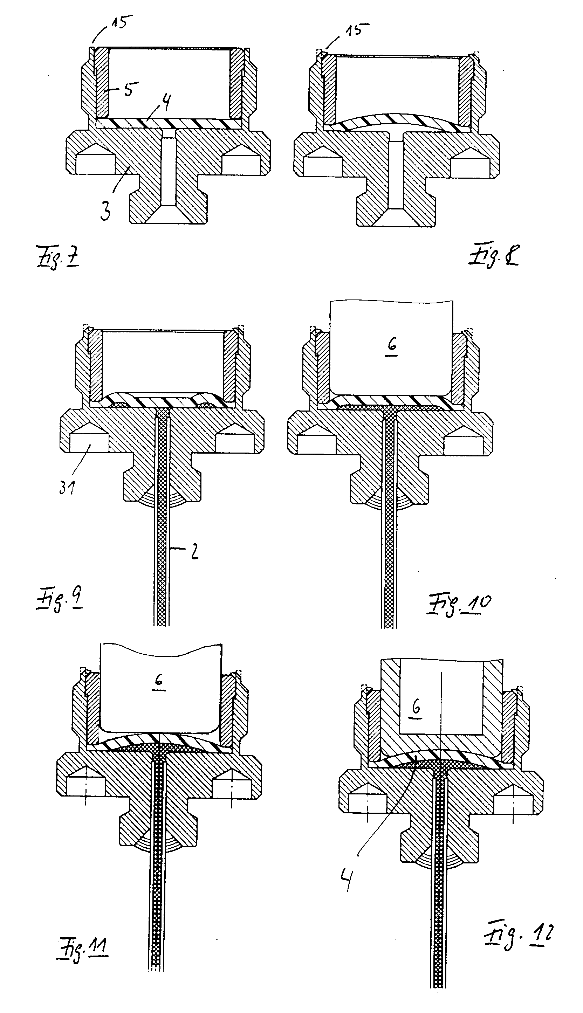

Die Funktionsweise der Vorrichtung sei insbesondere in Verbindung mit den Fig. 7 bis 12 etwas näher ergänzend erläutert, wobei die dortigen Teilelemente im wesentlichen der Ausführungsform gemäß Fig. 1 entsprechen, so das eingelötete Kapillarrohr 2, die topfförmige Membranaufnahme 3, die an deren Topfboden festgelegte Membran 4 und die die Fixierung bewirkende Fixierhülse 5.

Zunächst wird, wie in Fig. 7 dargestellt, die Membranscheibe 4 in den Topfboden eingelegt und die Fixierhülse 5 darüber gelegt. Danach wird, wie in Fig. 8 dargestellt, die Fixierhülse 5 durch Umbördeln des oberen freien Endes 15 über den Rand der Fixierhülse 5 diese nach unten gedrückt, so daß sich die Membran 4 leicht nach oben auswölbt. Anschließend wird (Fig. 9) das Kapillarrohr 2 eingelötet und beim Evakuieren des Systems wird die Kammer mit dem eingesetzten Medium gefüllt. Beim nachfolgenden Verschließen kann das überschüssige Medium herausgedrückt und somit eine optimale Füllung erreicht werden, wobei gezielt eine Art Wirkwelle erzeugt werden kann, etwa wie dies in Fig. 9 dargestellt ist. Wird in diesem Zustand die Elastomerscheibe als Membran von dem Boden des Steuerkolbens 6 beaufschlagt und nach einer evtl. geringfügigen Volumenausdehnung des Hydraulikmediums, wird die in Fig. 10 dargestellte Position erreicht. Dadurch, daß eine Vorverformung in einer Wirkwelle gemäß Fig. 9 vorgenommen worden ist, ergibt sich eine sehr viel höhere Lebensdauer der Elastomerscheibe als Membran, als dies bei bekannten Lösungen der Fall ist.

Fig. 11 zeigt eine Position in einer weitergehenden Auslenkung durch Erwärmung des Hydraulikmediums bei geringeren Gegen-Federkräften, wobei schließlich Fig. 12 eine Anpassung des Topfbodens an die Auslenkung darstellt, um je nach Beanspruchung auch durch diese Maßnahme eine höhere Lebensdauer der Elastomerscheibe als Membran zu erreichen.

Natürlich sind die beschriebenen Ausführungsbeispiele der Erfindung noch in vielfacher Hinsicht abzuändern, ohne den Grundgedanken zu verlassen. So können beispielsweise die als Wärmesperre beim Löten fungierenden Nuten 29 auch in mehreren Stufen und Abständen vorgesehen sein, statt des weiter oben in Verbindung mit Fig. 5 beschriebenen Werkzeugansatzes 25 zur Ausübung einer Eichverschraubung können die in Fig. 1 bzw. in den Fig. 7 bis 12 dargestellten Sackbohrungen 31 zum Eingriff eines Werkzeuges vorgesehen sein u. dgl. mehr.

## Patentansprüche

1. Vorrichtung (1) zur Regelung von Steuervorgängen unter Einsatz einer Hydraulikflüssigkeit in einem der Erhitzung unterworfenen Hydraulikreservoir mit einem Kapillarrohr (2), insbesondere als Thermosteuerung einer Gasbrennstelle, wobei die Hydraulikflüssigkeit eine Seite einer eingespannten Membran (4) beaufschlagt, die ihrerseits einen federbelasteten, axial verschiebbaren Steuerkolben (6) in einem Ventilgehäuse beaufschlagt, wobei im gleichen Ventilgehäuse neben Ein- und Austritt des im Durchfluß zu regelnden Fluids ein mit einer Durchflußöffnung versehener weiterer Ventilkolben vorgesehen ist, wobei die Membran am Boden (3a) einer etwa topfförmigen Membranaufnahme festgelegt ist, in der auch das freie Ende des Kapillarrohres angeordnet ist,
dadurch gekennzeichnet,
daß der Rand (4a) der Membran (4) von einer an der Membranaufnahme (3) festlegbaren, gewindefreien Fixierhülse (5) gegen den Topfboden (3a) festgelegt ist, wobei die Fixierhülse (5) an der topfförmigen Membranaufnahme (3) nach Einspannung der Membran (4) durch Umbördeln festgelegt ist.

2. Vorrichtung nach Anspruch 1,
dadurch gekennzeichnet,
daß die Fixierhülse mit abgerundeten Übergängen von der Innenseite zum unteren Rand und vom unteren Rand zur Außenseite versehen ist.

3. Vorrichtung nach Anspruch 1 oder 2,
dadurch gekennzeichnet,
daß der Rand des Topfbodens (3a) der Membranaufnahme (3) mit einer Ringnut (14) zum kreisringförmigen Eintritt des Membranrandes versehen ist, wobei der Membranrand von der an der Membranaufnahme (3) festlegbaren Fixierhülse (5a) beaufschlagt ist (Fig. 6).

4. Vorrichtung nach einem der vorangehenden Ansprüche,
dadurch gekennzeichnet,
daß die Membran-Fixierhülse (5) als Führungshülse für den Steuerkolben (6) ausgebildet ist.

5. Vorrichtung nach einem der vorangehenden Ansprüche,
dadurch gekennzeichnet,
daß die stirnseitige, an der Membran (4) anliegende Steuerkolbenfläche eine außenrandseitige Rückkröpfung (6a) oder Phase und/oder eine in Richtung auf das Steuerkolbeninnere weisende Wölbung aufweist.

6. Vorrichtung nach einem der vorangehenden Ansprüche,
dadurch gekennzeichnet,
daß der Einlaufbereich des Kapillarrohres (2) in die Membranaufnahme (3) mit einem das Verlöten vereinfachenden, nach außen weisenden Stutzen (28) versehen ist, der zum besseren Wärmeausgleich mit wenigstens einer den Stutzen querschnittlich verjüngenden Nut (29) ausgerüstet ist.

7. Vorrichtung nach einem der vorangehenden Ansprüche,
dadurch gekennzeichnet,
daß der Steuerkolben (6) seinerseits topfförmig ausgebildet ist mit einem innen geführten, federbeaufschlagten Ventilteller (8) zur Anlage an einem Ventilkolben (10).

8. Vorrichtung nach einem der vorangehenden Ansprüche,
dadurch gekennzeichnet,
daß der Ventilkolben (10) mit einer Durchgangsbohrung (16, 17) und auf seiner dem Ventilteller (8) zugewandten Kolbenfläche mit einer die Durchgangsöffnung umgebenden, sich am Ventilteller (8) dichtend anlegenden, insbesondere querschnittlich trapezförmigen Formdichtung (11) versehen ist.

9. Vorrichtung nach einem der vorangehenden Ansprüche,
dadurch gekennzeichnet,
daß die Durchgangsöffnung durch den Ventilkolben (10) als von der Formdichtung (11) her ausgebildete zentrische Sackbohrung (16) einerseits und wenigstens zwei von der entgegensetzten Seite außermittig angebrachten weiteren Sackbohrungen (17) andererseits derart gebildet ist, daß Bohrungsbereiche der entgegengesetzt eingebrachten Sackbohrungen (16,17) sich zur Bildung von Durchgangsöffnungen überschneiden.

10. Verfahren zur Herstellung einer Vorrichtung zur Regelung von Steuervorgängen unter Einsatz einer Hydraulikflüssigkeit in einem der Erhitzung unterworfenen Hydraulikreservoir mit einem Kapillarrohr, insbesondere zur Herstellung einer Vorrichtung nach einem der vorangehenden Ansprüche,
dadurch gekennzeichnet,
daß in eine mit einer Durchgangsbohrung für ein Kapillarrohr versehene, topfförmige Membranaufnahme (3) auf dem Topfboden eine die Kapillarrohrdurchgangsöffnung verschließende Membran (4) eingelegt und mit einer an der Membranaufnahme (3) festlegbaren Fixierhülse (5) gegen den Topfboden (3a) durch Umbördeln des freien Randes (15) der Membranaufnahme (3) über den freien Rand der eingelegten Fixierhülse (5) festgelegt wird.

11. Verfahren nach Anspruch 10,
dadurch gekennzeichnet,
daß im oberen Innenrandbereich der Membranaufnahme (3) eine Auflageschulter (26) erzeugt wird, an die sich ein nach außen weisender Kragen (27) der Fixierhülse (5) zur Erzeugung einer gleichbleibenden Vorspannung für die Membran (4) beim Festlegen der Fixierhülse durch Umbördeln des oberen freien Randes (15) der Membranaufnahme (3) anlegt.

12. Verfahren nach Anspruch 10 oder einem der folgenden,
dadurch gekennzeichnet,
daß nach Einlöten des Kapillarrohres (2) in die Membranaufnahme (3) eine Füllung mit Hydraulikflüssigkeit bei erhöhter Temperatur durchgeführt wird.

13. Verfahren nach Anspruch 10 oder einem der folgenden,
dadurch gekennzeichnet,
daß durch die Verspannung die außenrandseitige Verpressung der Membran (4) am Topfboden (3a) eine Voraufwölbung der Membran erzeugt wird.
